# EUROPEAN PATENT APPLICATION

(11) **EP 3 272 434 A1**
(43) Date of publication of application: **24.01.2018**
(21) Application number: 16765055.5
(22) Date of filing: 17.03.2016
(51) Int. Cl.: B08B 11/00, G02B 6/38

(54) **END-SURFACE CLEANER**

(30) Priority: 18.03.2015 JP 2015055103; 21.12.2015 JP 2015248977
(71) Applicant: Tomoegawa Co., Ltd., Tokyo 104-8335 (JP)
(72) Inventor: SUZUKI, Masayoshi, Shizuoka-shi Shizuoka 424-0831 (JP); HASHIMOTO, Nobuhiro, Tokyo 104-8335 (JP); SUGIYAMA, Hiroshi, Shizuoka-shi Shizuoka 421-0192 (JP); SHIMA, Akiyoshi, Tokyo 104-8335 (JP)
(74) Representative: V.O.
(86) International application number: PCT/JP2016/058451
(87) International publication number: WO 2016/148226

(57) **Abstract**

The present invention provides an end-face cleaner for cleaning an end face having a pin projected thereon, comprising an adhesive layer configured to be pierced with a pin, and a support configured to support the adhesive layer and expose a partial surface of the adhesive layer.

## Description

### TECHNICAL FIELD

The present invention relates to an end-face cleaner for cleaning, for example, an end face of an optical connector having a fitting pin projected thereon or the like.

This application claims priority rights based on Japanese Patent Application No. 2015-055103 filed on March 18, 2015, and Japanese Patent Application No. 2015-248977 filed on December 21, 2015, the content of which is incorporated herein by reference.

### BACKGROUND ART

In an optical connector for connecting optical fibers, a connection end face is required to be clean in order to transmit an optical signal accurately. Therefore, operators clean the connection end face with a cleaning tool at the work site for connecting the optical fibers.

As a cleaning tool for cleaning the connection end face, for example, Patent Document 1 discloses a cleaner provided with a rotating shaft and its driving mechanism on one end of a casing and furnishing an optical connector cleaning part with a fresh cleaning face appearing in each cleaning at the tip of the rotating shaft. Patent Document 2 discloses a cleaning tool that exposes a cleaning sheet contained in a casing from the cleaning window of the box type casing and cleans the connection end face of the optical connector by the exposed cleaning sheet. Patent Document 3 discloses a cleaning tool for cleaning a connection end face of an optical connector, in which a belt-like cleaning cloth contained inside a casing is pressed by a cleaning head and protruded from the casing, thereby cleaning the connection end face of the optical connector.

On the other hand, Patent Document 4 discloses a brush-like cleaning tool provided with a loop part formed by folding a synthetic fiber bundle and a holding part held by an operator, wherein a fitting pin of the optical connector is engaged into the loop portion and the optical cleaning tool is rotated by making the fitting pin a rotation center, thereby the circumferential surface of fitting pin is cleaned.

### PRIOR ART LITERATURE

### Patent Documents

[Patent Document 1] Japanese Unexamined Patent Application Publication No. Hei 09-285766
[Patent Document 2] Japanese Unexamined Patent Application Publication No. 2001-246343
[Patent Document 3] WO 2014/141405
[Patent Document 4] Japanese Unexamined Patent Application Publication No. 2004-66074

### DISCLOSURE OF INVENTION

### Problems to be Solved by the Invention

However, the cleaning tools of Patent Documents 1 to 3 are large in size, complicated in mechanism and disadvantageous in terms of cost, and several operations are necessary for cleaning, that is, it is not possible to clean the entire end face by a single operation. Further, for example, when the end face of the optical connector to be cleaned is made by so-called "8-degree polishing" and the angle between the fitting pin and the end face is not a right angle, even if the end face on the side that appears on the tip side of the fitting pin can be cleaned relatively easily, it is difficult to clean the end face on the retreating side, and difficult to uniformly clean the entire end face.

On the other hand, the cleaning tool of Patent Document 4 has a simple configuration, but when cleaning the fitting pin of the optical connector, an operation of rotating the cleaning tool is necessary after the operator has engaged the fitting pin in the loop, and thus, it was still impossible to clean the end face and the fitting pin by a single operation. For this reason, the ease of operation is inferior and it takes time to clean one end face.

An objective of the present invention is to provide a cleaner which is capable of cleaning an end face having a pin such as a fitting pin projected thereon, as well as a peripheral surface of the pin with a simple and single operation in a short time, and which is simple in configuration and advantageous in cost.

### Means for Solving the Problems

The present invention includes the following aspects.
1. An end-face cleaner for cleaning an end face having a pin projected thereon, comprising
   an adhesive layer configured to be pierced with a pin, and
   a support configured to support the adhesive layer and expose a partial surface of the adhesive layer.
2. The end-face cleaner according to [1], wherein
   the support comprises a plate.
3. The end-face cleaner according to [1], wherein
   the support comprises a plate and a side wall formed around a periphery of the plate so as to surround the adhesive layer from the side.
4. The end-face cleaner according to [3], wherein
   the support further comprises a partition plate erected on the plate.
5. The end-face cleaner according to any one of [2] to [4], wherein
   the plate includes one or more layers, and
   a layer which is in contact with the adhesive layer of the plate is configured to be pierced with the pin.
6. The end-face cleaner according to [2], wherein
   one or more openings are formed on the plate, and
   a surface of the adhesive layer is exposed from the openings.
7. The end-face cleaner according to [1], wherein
   the support includes a first support covering one side of the adhesive layer and a second support covering the other side of the adhesive layer,
   the first support is composed of a plate,
   one or more openings are formed on the plate, and
   the surface of the adhesive layer is exposed from the openings.
8. The end-face cleaner according to [7], wherein
   the second support is composed of a plate.
9. The end-face cleaner according to [7], wherein
   the second support is composed of a plate and a side wall formed around a periphery of the plate so as to surround the adhesive layer from the side.
10. The end-face cleaner according to [8] or [9], wherein
   the plate of the second support includes one or more layers, and
   a layer which is in contact with the adhesive layer of the plate of the second support is configured to be pierced with the pin.
11. The end-face cleaner according to any one of [1] to [10], wherein
   the end-face cleaner comprises a cover for covering the exposed surface of the adhesive layer.
12. The end-face cleaner according to [5] or [10], wherein
   the layer which is in contact with the adhesive layer of the plate is formed of a foam.
13. The end-face cleaner according to claim any one of [1] to [12], wherein
   the end-face cleaner is for cleaning an optical connector having a pin projected on an end face thereof.

### Effects of the Invention

The end-face cleaner of the present invention is capable of cleaning an end face having a pin such as a fitting pin projected thereon, as well as a peripheral surface of the pin with a simple and single operation in a short time, and also is simple in configuration and advantageous in cost.

### BRIEF DESCRIPTION OF THE DRAWINGS

FIG. 1A is a perspective view showing an end-face cleaner according to the first embodiment.
FIG. 1B is a vertical cross-sectional view showing an end-face cleaner according to the first embodiment.
FIG. 1C is a perspective view showing an optical connector.
FIG. 2A is a cross-sectional view explaining a method of cleaning an end face of an optical connector having a fitting pin projected thereon using an end-face cleaner according to the first embodiment, and showing a state in which the fitting pin projected on the end face of the optical connector is pierced into the adhesive layer of the end-face cleaner and the end face is pressed against the adhesive layer.
FIG. 2B is a cross-sectional view explaining a method of cleaning an end face of an optical connector having a fitting pin projected thereon using an end-face cleaner according to the first embodiment, and showing a state in which the fitting pin is removed from the adhesive layer.
FIG. 3 is a vertical cross-sectional view showing an end-face cleaner according to the second embodiment.
FIG. 4 is a cross-sectional view showing a state in which when an end face of an optical connector having a fitting pin projected thereon is cleaned using an end-face cleaner of the second embodiment, the fitting pin projected on the end face of the optical connector is pierced into the adhesive layer of the end-face cleaner and the end face is pressed against the adhesive layer.
FIG. 5 is a cross-sectional view showing a state in which when an end face of an optical connector having a fitting pin projected thereon is cleaned using an end-face cleaner of the third embodiment, the fitting pin projected on the end face of the optical connector is pierced into the adhesive layer of the end-face cleaner and the end face is pressed against the adhesive layer.
FIG. 6 is a vertical cross-sectional view showing an end-face cleaner of the fourth embodiment.
FIG. 7 is a vertical cross-sectional view showing an end-face cleaner according to the fifth embodiment.
FIG. 8A is a perspective view showing another embodiment of the end-face cleaner according to the fifth embodiment.
FIG. 8B is a vertical cross-sectional view showing another embodiment of the end-face cleaner according to the fifth embodiment.
FIG. 9A is a cross-sectional view explaining a method of cleaning an end face of an optical connector having a fitting pin projected thereon using an end-face cleaner shown in FIG. 8A, and showing a state of peeling off one piece of film.
FIG. 9B is a cross-sectional view explaining a method of cleaning an end face of an optical connector having a fitting pin projected thereon using an end-face cleaner shown in FIG. 8A, and showing a state in which the fitting pin projected on the end face of the optical connector is pierced into the adhesive layer of the end-face cleaner and the end face is pressed against the surface of the adhesive layer.
FIG. 9C is a cross-sectional view explaining a method of cleaning an end face of an optical connector having a fitting pin projected thereon using an end-face cleaner shown in FIG. 8A, and showing a state in which the fitting pin is removed from the layer.
FIG. 10 is a vertical cross-sectional view showing an end-face cleaner according to the sixth embodiment.
FIG. 11 is a vertical cross-sectional view showing another embodiment of an end-face cleaner of the sixth embodiment.
FIG. 12 is a vertical cross-sectional view showing an end-face cleaner according to the seventh embodiment.
FIG. 13 is a vertical cross-sectional view showing another embodiment of an end-face cleaner according to the seventh embodiment.
FIG. 14A is a perspective view showing an end-face cleaner according to the eighth embodiment.
FIG. 14B is a vertical cross-sectional view showing an end-face cleaner according to the eighth embodiment.
FIG. 15A is a cross-sectional view explaining a method of cleaning an end face of an optical connector having a fitting pin projected thereon using an end-face cleaner of the eighth embodiment, and showing a state of peeling off one piece of film.
FIG. 15B is a cross-sectional view explaining a method of cleaning an end face of an optical connector having a fitting pin projected thereon using an end-face cleaner of the eighth embodiment, and showing a state in which the fitting pin projected on the end face of the optical connector is pierced into the adhesive layer which is exposed by peeling off the film piece and the end face is pressed against the surface of the adhesive layer.
FIG. 15C is a cross-sectional view explaining a method of cleaning an end face of an optical connector having a fitting pin projected thereon using an end-face cleaner of the eighth embodiment, and showing a state in which the fitting pin is removed from the adhesive layer.
FIG. 16 is a vertical cross-sectional view showing an end-face cleaner according to the ninth embodiment.
FIG. 17 is a vertical cross-sectional view showing an end-face cleaner according to the tenth embodiment.
FIG. 18 is a vertical cross-sectional view showing an end-face cleaner according to the eleventh embodiment.

### BEST MODE FOR CARRYING OUT THE INVENTION

The end-face cleaner of the present invention is an end-face cleaner for cleaning an end face having a pin projected thereon. As an object to be cleaned, an optical connector having an end face having a fitting pin (pin) projected thereon (MT connector (F12 type multi-core optical fiber connector: JIS C 5981), MPO connector (F13 type multi-fiber optical fiber connector: JIS C 5982), MTRJ connector, MPX connector, etc.); a plug on which 2 to 3 pins for inserting into a socket of a receptacle are projected, and the like can be mentioned.

The end-face cleaner of the present invention includes an adhesive layer configured to be pierced with a pin and a support configured to support the adhesive layer and expose a partial surface of the adhesive layer. As will be described in detail later, in the end-face cleaner of the present invention, the pin projected on the end face of an object to be cleaned is pierced into the surface of the exposed adhesive layer, and by pressing the end face against the surface of the adhesive layer, the end face having a pin projected thereon can be cleaned easily in a short time, as well as a peripheral face of the pin.

Hereinafter, the end-face cleaner of the present invention will be described in detail with reference to the embodiment examples, and by showing the cases of cleaning the end face of the optical connector having a fitting pin projected thereon.

In the present invention, "piercing" means pressing the pin. By pressing the pin, the adhesive layer at the portion where the pin is pushed recesses following the shape of the pin, or a penetrating or non-penetrating hole is formed thereon. After removing the pin, the adhesive layer returns to the original shape with its depression removed, or the penetrating or non-penetrating hole is closed.

### [First Embodiment]

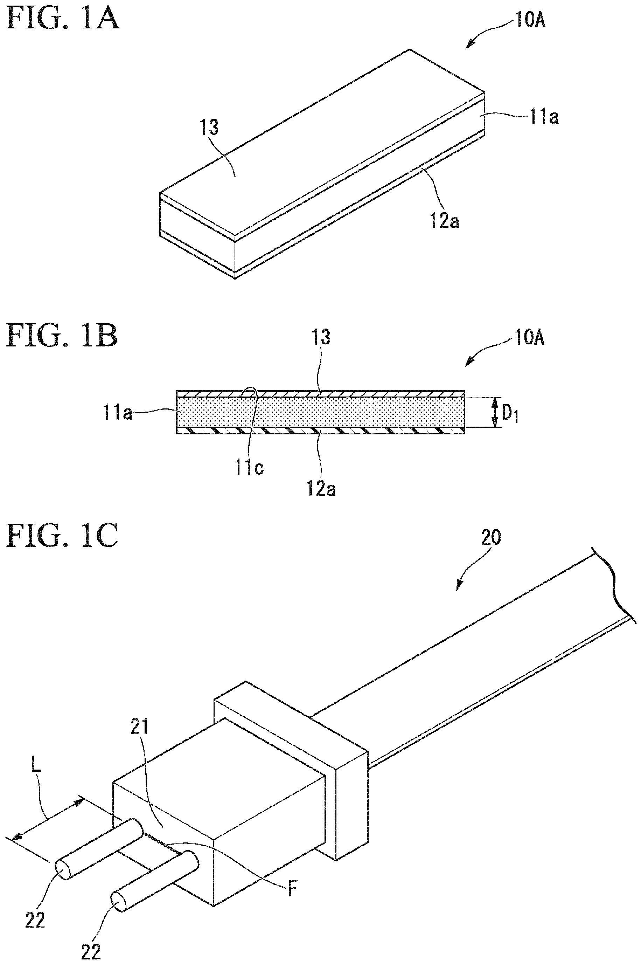

FIG. 1A is a perspective view showing an end-face cleaner of the first embodiment, FIG. 1B is a vertical cross-sectional view showing an end-face cleaner of the first embodiment, and FIG. 1C is a perspective view showing an optical connector which is an object to be cleaned. The optical connector 20 illustrated in FIG. 1C is an optical connector in which two fitting pins 22 are projected on the end face (connection end face) 21. Reference symbol F in FIG. 1C is an optical fiber.

The end-face cleaner 10A of the first embodiment includes an adhesive layer 11a configured to be pierced with a fitting pin 22, a rigid plate 12a (support) laminated on one surface of the adhesive layer 11a and support the same, wherein the end-face cleaner is formed in a rectangular plate shape having a portable size. On the exposed side of the surface 11c of the adhesive layer 11a where the plate 12a is not provided, a cover film (cover) 13 is peelably provided and covers the surface 11c of the adhesive layer 11a. The cover film 13 is peeled off when cleaning the optical connector 20 using the end-face cleaner 10A.

As shown in FIGS. 1A to 1C, the adhesive layer 11a of the end-face cleaner 10A of the first embodiment has a thickness (D₁) that is equal to or greater than the length (L) of the fitting pin 22 of the optical connector 20. In this example, the thickness (D₁) of the adhesive layer 11a is approximately 2.5 to 3.0 mm.

The adhesive layer 11a is formed of a known adhesive such as a rubber type adhesive, an acrylic-base adhesive, a silicone-based adhesive, a urethane-based adhesive or the like. For the adhesive layer 11a, for example, additives for adhesives such as tackifier and filler may be blended appropriately.

As the cover film 13, a known resin film which has undergone releasing treatment for the adhesive layer 11a, or the like, may be used.

In addition, the examples listed herein can also be used for an adhesive layer and a cover film of the following embodiments.

The rigid plate 12a is made of, for example, a metal plate, a resin plate (a plate made of polyolefin (polypropylene, polyethylene), amorphous polyester, polyvinyl chloride, polyvinylidene fluoride, nylon, etc.), and is set to a thickness according to the material thereof etc. so that the adhesive layer 11a can be stably supported. The plate 12a does not need to be pierced by the fitting pin 22.

In addition, the examples listed herein can also be used for a rigid plate of the following embodiments.

When cleaning the end face (connection end face) 21 having the fitting pin 22 projected thereon of the optical connector 20 using the end-face cleaner 10A of the first embodiment, firstly the operator peels off the cover film 13 of the end-face cleaner 10A to expose the surface 11c of the adhesive layer 11a.

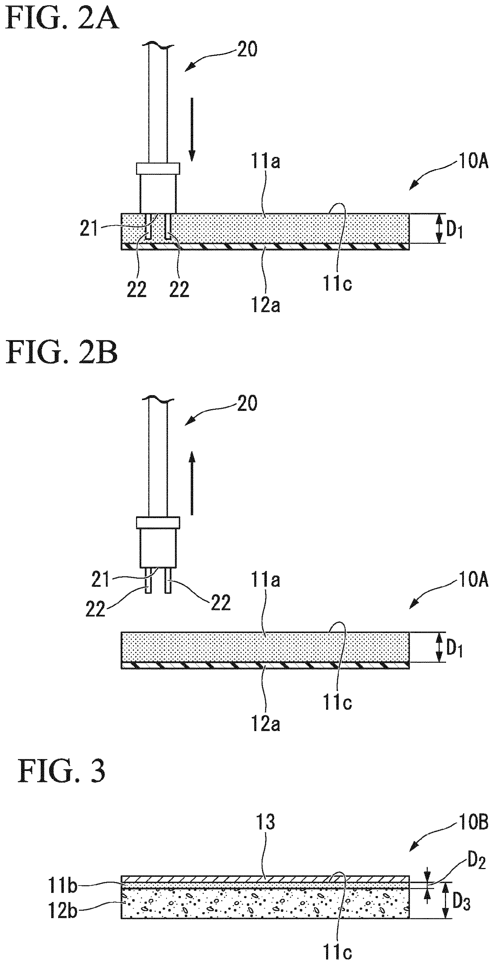

Next, The operator holds the optical connector with one hand and holds the end-face cleaner 10A with the other hand so that the end face 21 of the optical connector 20 is brought close to the surface 11c of the exposed adhesive layer 11a of the end-face cleaner 10A, and the fitting pin 22 is pierced into the adhesive layer 11a and the end face 21 is pressed against the surface 11c of the adhesive layer 11a as shown in FIG. 2A. In this example, since the thickness (D₁) of the adhesive layer 11a is equal to or greater than the length (L) of the fitting pin 22 of the optical connector 20, the fitting pin 22 is pierced into the adhesive layer 11a over the entire length. Further, in this example, a non-penetrating hole is formed by piercing the fitting pin 22 to the adhesive layer 11a.

Next, as shown in FIG. 2B, the end face 21 of the optical connector 20 is pulled away from the adhesive layer 11a, and the fitting pin 22 is removed from the adhesive layer 11a. When the fitting pin 22 is removed from the adhesive layer 11a, the non-penetrating hole is closed.

In the above-described cleaning operation, dust, dirt or the like adhered to the end face 21 of the optical connector 20 adheres and moves to the surface 11c of the adhesive layer 11a because the end face 21 is pressed against the surface 11c of the adhesive layer 11a. In addition, dust, dirt or the like adhered to the peripheral surface of the fitting pin 22 also adheres and moves to the adhesive layer 11a while the fitting pin 22 is pierced into and removed from the adhesive layer 11a.

As described above, according to the end-face cleaner 10A of the first embodiment, dust, dirt or the like adhered to the end face 21 and the peripheral surface of the fitting pin 22 can be removed by a simple and quick operation in which the operator merely presses the end face 21 of the optical connector 20 against the adhesive layer 11a of the end-face cleaner 10A to pierce and remove the fitting pin 22. Therefore, the end face 21 having the fitting pin 22 projected thereon as well as the peripheral face of the fitting pin 22 can be cleaned with a single operation.

Further, for example, even when the end face of the optical connector is made by so-called "8-degree polishing" and the angle between the fitting pin and the end face is not a right angle, the surface of the end face can be cleaned uniformly and evenly.

In addition, the end-face cleaner 10A of the first embodiment is simple in configuration and advantageous in cost.

In addition, the end-face cleaner 10A of the first embodiment is formed in a size that can be carried by an operator. Therefore, when the operator performs an operation of connecting an optical connector at a certain place and then moves to another place to perform the operation of connecting the optical connector, etc., the operator can easily carry the end-face cleaner 10A to perform the cleaning work at each place.

In FIG. 2A, the cover film 13 is completely peeled off so that the entire surface 11c of the adhesive layer 11a is exposed. However, it is unnecessary to peel off the cover film 13 so that the entire surface 11c of the adhesive layer 11a is exposed, and as long as the surface 11c which is exposed has the area and shape necessary for cleaning the end face 21 of the optical connector 20, the cover film 13 may be partially peeled off.

For example, as in this example, when the area of the surface 11c of the adhesive layer 11a is sufficiently larger than the area of the end face 21 of the optical connector 20, the cleaning operation can be performed even if only a part of the surface 11c of the adhesive layer 11a is exposed. Further, after that, the cover film 13 may be restored to cover the surface 11c of the exposed adhesive layer 11a again.

Next, when cleaning the end face 21 of another optical connector 20, the cover film 13 may be partially peeled off again to expose the surface 11c of the adhesive layer 11a and perform the cleaning work. At this time, if the amount of dust and dirt adhered to the end face 21 and the fitting pin 22 of the optical connector 20 to be cleaned is small and the degree of contamination is low, a plurality of end faces 21 of the optical connectors 20 may be cleaned with the same area on the surface 11c of the adhesive layer 11a. If the degree of contamination is high, it is preferable to expose a new surface 11c each time cleaning a new optical connector 20 to perform the cleaning of the end face 21.

In this manner, cleaning of the plurality of optical connectors 20 can be performed with one end-face cleaner 10A.

The cover film 13 covering the adhesive layer 11a is not composed of one piece and may be divided into a plurality of sheets as described in the fifth to eleventh embodiments described later. By adopting such a configuration, it is also possible to peel off a part of the divided plural sheets and expose only a part of the area of the adhesive layer 11a.

Therefore, when the area of the surface 11c of the adhesive layer 11a is sufficiently larger than the area of the end face 21 of the optical connector 20, it is acceptable that only the area necessary for cleaning the end face 21 of an optical connector 20 in the surface 11c of the adhesive layer 11a be exposed.

Although FIG. 2 shows a state in which the end face 21 of the optical connector 20 is pressed against the surface 11c of the adhesive layer 11a in a positional relationship in which the longitudinal direction of the end-face cleaner 10A is parallel to the longitudinal direction of the end face 21 of the optical connector 20, the end-face cleaner 10A may be pressed in the manner that the longitudinal direction thereof is parallel to the short side direction of the end face 21 of the optical connector 20, and there is no particular limitation on the positional relationship in the cleaning operation.

The end-face cleaner 10A of the first embodiment can be manufactured by a method of forming an adhesive layer 11a on a rigid plate 12a and providing a cover film 13 thereon.

The adhesive layer 11a may be formed in accordance with the material of the adhesive layer 11a or the like. For example, the monomer component constituting the adhesive layer 11a is coated on the plate 12a, followed by curing (crosslinking) the monomer component by heating, light irradiation or the like according to need. Alternatively, the adhesive layer may be formed by forming it on a separately-prepared sheet having transferability, followed by transferring the adhesive layer onto a plate 12a or the like.

### [Second Embodiment]

FIG. 3 is a vertical cross-sectional view showing an end-face cleaner according to the second embodiment.

The end-face cleaner 10B of the second embodiment includes an adhesive layer 11b configured to be pierced with a fitting pin 22 and a plate 12b (support) configured to be pierced with the fitting pin 22 and laminated on one surface of the adhesive layer 11b to support the same, wherein the end-face cleaner is formed in a rectangular plate shape having a portable size. A cover film (cover) 13 is peelably provided on the surface 11c of the adhesive layer 11b on the exposed side where the plate 12b is not provided, and covers the surface 11c of the adhesive layer 11b.

As shown in FIG. 3, the end-face cleaner 10B of the second embodiment is different from the end-face cleaner 10A of the first embodiment in that the adhesive layer 11b has a thickness (D₂) smaller than the length (L) of the fitting pin 22 of the optical connector 20, and the end-face cleaner includes a plate 12b configured to be pierced with a fitting pin 22 as a support.

Examples of the plate 12b configured to be pierced with the fitting pin 22 include a foam of resin such as polyurethane, ethylene vinyl acetate, polystyrene, polyethylene or the like; a rubber type sponge such as neoprene, natural sponge or the like; and the like. In this example, the total thickness (D₃) of the adhesive layer 11b and the plate 12b configured to be pierced with the fitting pin 22 is set to be not less than the length (L) of the fitting pin 22 of the optical connector 20.

In addition, the examples listed herein can also be used for a plate configured to be pierced with a pin such as a fitting pin of the following embodiments.

Even in the case of using the end-face cleaner 10B of the second embodiment, as in the case of the end-face cleaner 10A of the first embodiment, the operator can carry the end-face cleaner and clean the end face 21 having the fitting pin 22 projected thereon of the optical connector 20 in a short time using a similar and simple procedure and operation.

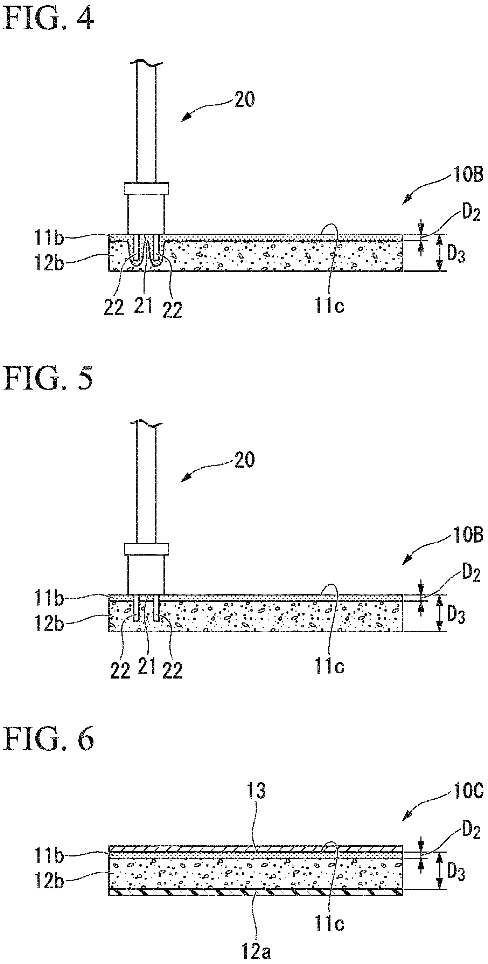

In the end-face cleaner 10B of the second embodiment, the thickness (D₂) of the adhesive layer 11b is smaller than the length (L) of the fitting pin 22. Therefore, in this example, as shown in FIG. 4, when the operator pierces the fitting pin 22 of the optical connector 20 into the adhesive layer 11b, the adhesive layer 11b at the portion where the fitting pin 22 is pressed recesses following the shape of the fitting pin 22. However, even in such a case, dust, dirt or the like adhered to the peripheral surface of the fitting pin 22 adheres and moves to the adhesive layer 11b in the process in which the fitting pin 22 recesses the adhesive layer 11b and then is pulled out. As in the case of the first embodiment, dust, dirt or the like adhered to the end face 21 of the optical connector 20A adheres and moves to the adhesive layer 11b by pressing the end face 21 against the surface 11c of the adhesive layer 11b.

In addition, the plate 12b at the portion where the fitting pin 22 is pierced recesses following the shape of the fitting pin 22, or a penetrating or non-penetrating hole is formed thereon.

In addition, the adhesive layer 11b after the fitting pin 22 has been removed returns to the original shape with its depression removed. On the other hand, the plate 12b is returned to the original shape with its depression removed and the penetrating hole or non-penetrating hole is closed. However, in the case where the plate 12b is made of a polystyrene, when the fitting pin 22 is pierced, a penetrating or non-penetrating hole will be formed, and even if the fitting pin 22 is pulled out, it is difficult to close the hole.

The end-face cleaner 10B of the second embodiment can reduce the amount of the adhesive for forming the adhesive layer as compared with the end-face cleaner 10A of the first embodiment. Therefore, the cost required for forming the adhesive layer can be suppressed.

In addition, by using a foam for the plate 12b of the end-face cleaner 10B of the second embodiment, the feeling of use of the end-face cleaner 10B can be improved. That is, when the operator pierces the fitting pin 22, the sense of resistance is reduced, while clarity of response to the cleaning operation (feeling at piercing) can be obtained.

The end-face cleaner 10B of the second embodiment can be manufactured by a method in which the adhesive layer 11b is formed on the plate 12b configured to be pierced with the fitting pin 22 and the cover film 13 is provided thereon.

As described above, the adhesive layer 11b may be formed according to the material of the adhesive layer 11b or the like.

### [Third Embodiment]

Similar to the end-face cleaner of the second embodiment, the end-face cleaner of the third embodiment, as shown in FIG. 3, includes an adhesive layer 11b configured to be pierced with the fitting pin 22 and a plate 12b (support) configured to be pierced with a fitting pin 22 and laminated on one surface of the adhesive layer 11b to support the same, wherein the end-face cleaner is formed in a rectangular plate shape having a portable size. A cover film (cover) 13 is peelably provided on the surface 11c of the adhesive layer 11b on the exposed side where the plate 12b is not provided, and covers the surface 11c of the adhesive layer 11b.

As shown in FIG. 3, the end-face cleaner 10B of the third embodiment is different from the end-face cleaner 10A of the first embodiment in that the adhesive layer 11b has a thickness (D₂) smaller than the length (L) of the fitting pin 22 of the optical connector 20 and the end-face cleaner includes a plate 12b configured to be pierced with the fitting pin 22 as a support.

Examples of the plate 12b configured to be pierced with the fitting pin 22 include a foam of a resin such as polyurethane, ethylene vinyl acetate, polystyrene, polyethylene and the like, a rubber type sponge such as neoprene and natural sponge, and the like. In this example, the total thickness (D₃) of the adhesive layer 11b and the plate 12b configured to be pierced with the fitting pin 22 is set to be not less than the length (L) of the fitting pin 22 of the optical connector 20.

In addition, the examples listed herein can also be used for a plate configured to be pierced with a pin such as a fitting pin of the following embodiments.

Even in the case of using the end-face cleaner 10B of the third embodiment, as in the case of the end-face cleaner 10A of the first embodiment, the operator can carry the end-face cleaner and clean the end face 21 having the fitting pin 22 projected thereon of the optical connector 20 in a short time using a similar and simple procedure and operation.

In the end-face cleaner 10B of the third embodiment, the thickness (D₂) of the adhesive layer 11b is smaller than the length (L) of the fitting pin 22. Therefore, in this example, as shown in FIG. 5, when the operator pierces the fitting pin 22 of the optical connector 20 into the adhesive layer 11b and presses the end face 21 against the surface 11c of the adhesive layer 11b, the fitting pin 22 penetrates through the adhesive layer 11b and the portion on the distal end side of the fitting pin 22 will be located in the plate 12b configured to be pierced with the fitting pin 22 instead of the adhesive layer 11b. That is, penetrating holes will be formed in the adhesive layer 11b. However, even in such a case, dust, dirt or the like adhered to the peripheral surface of the fitting pin 22 adheres and moves to the adhesive layer 11b in the process in which the fitting pin 22 penetrates through the adhesive layer 11b and then is pulled out. As in the case of the first embodiment, dust, dirt or the like adhered to the end face 21 of the optical connector 20 adheres and moves to the adhesive layer 11b by pressing the end face 21 against the surface 11c of the adhesive layer 11b. As a result, dust, dirt or the like is removed.

In addition, the plate 12b at the portion where the fitting pin 22 is pierced recesses following the shape of the fitting pin 22, or a penetrating or non-penetrating hole is formed thereon.

Further, when the fitting pin 22 is pulled out, the penetrating hole formed in the adhesive layer 11b is closed. On the other hand, the plate 12b returns to the original shape with its depression removed and the penetrating hole or non-penetrating hole is closed. However, in the case where the plate 12b is made of a polystyrene, when the fitting pin 22 is pierced, a penetrating or non-penetrating hole is formed, and even if the fitting pin 22 is pulled out, it is difficult to close the hole.

As in the end-face cleaner 10B of the second embodiment, the end-face cleaner 10B of the third embodiment can reduce the amount of the adhesive for forming the adhesive layer as compared with the end-face cleaner 10A of the first embodiment. Therefore, the cost required for forming the adhesive layer can be suppressed.

In addition, by using a foam for the plate 12b of the end-face cleaner 10B of the third embodiment, the feeling of use of the end-face cleaner 10B can be improved. That is, when the operator pierces the fitting pin 22, the sense of resistance is reduced, while clarity of response to the cleaning operation (feeling at piercing) can be obtained.

The end-face cleaner 10B of the third embodiment can be manufactured by a method in which the adhesive layer 11b is formed on the plate 12b configured to be pierced with the fitting pin 22 and the cover film 13 is provided thereon.

As described above, the adhesive layer 11b may be formed according to the material of the adhesive layer 11b or the like.

### [Fourth Embodiment]

FIG. 6 is a vertical cross-sectional view showing an end-face cleaner of a fourth embodiment.

In the end-face cleaner 10B of the second embodiment and the third embodiment described above, as shown in FIG. 3, the support is composed of only the plate 12b which is configured to be pierced with the fitting pin 22 and provided in contact with the adhesive layer 11b. On the other hand, as shown in FIG. 6, the support of the end-face cleaner 10C of the fourth embodiment is composed of two layers, namely, composed of a rigid plate 12a such as a metal plate, a resin plate, etc. in addition to the plate 12b which is configured to be pierced with the fitting pin 22 and provided in contact with the adhesive layer 11b. It is not necessary that the rigid plate 12a can be pierced with the fitting pin 22.

With such a configuration, more rigidity and strength can be imparted to the end-face cleaner 10C, and the plate 12b configured to be pierced with the fitting pin 22 can be protected.

In this example, although the plate used as a support has two layers, three or more layers are also acceptable if necessary. However, in the case of using the plate 12b configured to be pierced with a fitting pin 22 as a plate, as shown in FIG. 6, it is necessary that the plate 12b is provided on the side in contact with the adhesive layer 11b.

In the end-face cleaner 10C of the fourth embodiment as well, on the exposed side of the surface 11c of the adhesive layer 11a where the plate 12a and plate 12b are not provided as a support, a cover film (cover) 13 is peelably provided and covers the surface 11b of the adhesive layer 11b.

Even in the case of using the end-face cleaner 10C of the fourth embodiment, as in the case of the end-face cleaner 10A of the first embodiment, the operator can carry the end-face cleaner and clean the end face 21 having the fitting pin 22 projected thereon of the optical connector 20 in a short time using a similar and simple procedure and operation.

The end-face cleaner 10C of the fourth embodiment can be manufactured by a method in which a laminate of a rigid plate 12a and a plate 12b configured to be pierced with the fitting pin 22 is formed, and an adhesive layer 11b is formed thereon so as to contact a plate 12b configured to be pierced with the fitting pin 22, and a cover film 13 is provided thereon.

### [Fifth Embodiment]

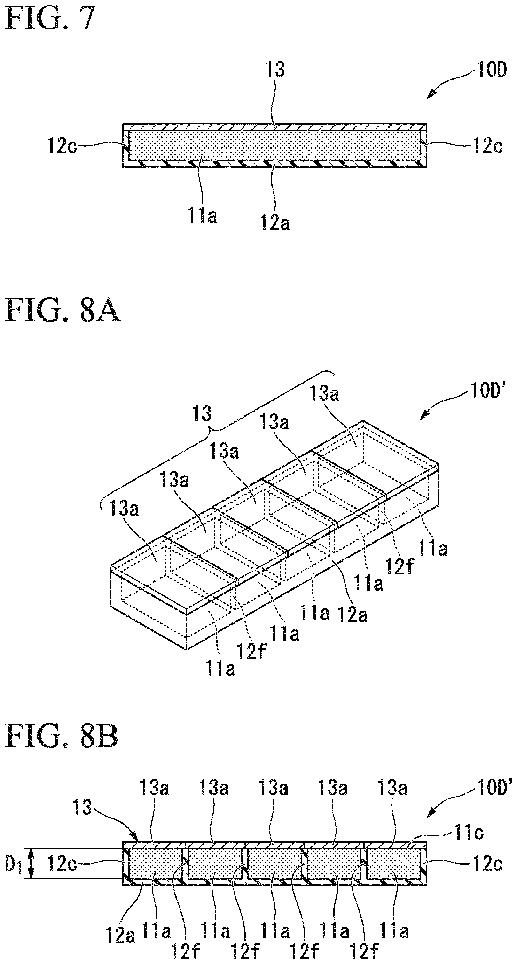

FIG. 7 is a vertical cross-sectional view showing an end-face cleaner according to the fifth embodiment.

The end-face cleaner 10D of the fifth embodiment is different from the end-face cleaner 10A of the first embodiment in that the end-face cleaner 10D of the fifth embodiment includes a rigid plate 12a as a support and a side wall 12c erected on the periphery of the plate 12a so as to surround the adhesive layer 11a from the side.

Even in the case of using the end-face cleaner 10D of the fifth embodiment, as in the case of the end-face cleaner 10A of the first embodiment, the operator can carry the end-face cleaner and clean the end face 21 having the fitting pin 22 projected thereon of the optical connector 20 in a short time using a similar and simple procedure and operation.

As the support composed of the plate rigid 12a and the side wall 12c formed on the periphery of the plate 12a, a shallow dish-shaped container having one end (upper end) opened, or the like can be used.

When a dish-like container or the like is used as described above, monomer components constituting the adhesive layer 11a can be poured into the container. Then, these monomer components are cured (crosslinked) by heating, light irradiation or the like according to need, thereby easily manufacturing the end-face cleaner 10D.

The material of the side wall 12c may be the same as or different from that of the plate 12a.

Further, as shown in FIGS. 8A and 8B, one or more partition plates 12f erected on the plate 12a to divide the adhesive layer 11a into plural parts may be used as a support in addition to the above described plate 12a and side wall 12c. In this example, four partition plates 12f are arranged parallel to the short side direction of the end-face cleaner 10 D' and equally spaced from each other. With these partition plates 12f, the adhesive layer 11a is divided into five areas, and in each area, the surface 11c of the adhesive layer 11a is exposed. The surface 11c of the adhesive layer 11a in each area is substantially similar to the end face 21 of the optical connector 20, and is formed to have a size slightly larger than the end face 21.

In addition, on the surface 11c of the adhesive layer 11a in each area, a cover film 13 is peelably provided to cover the surface 11c of each adhesive layer 11a. In this example, the cover film 13 is divided into plural parts (five in this example) so as to correspond to the surface 11c of the each adhesive layer 11a. That is, the cover film 13 of this example is divided into five film pieces 13a.

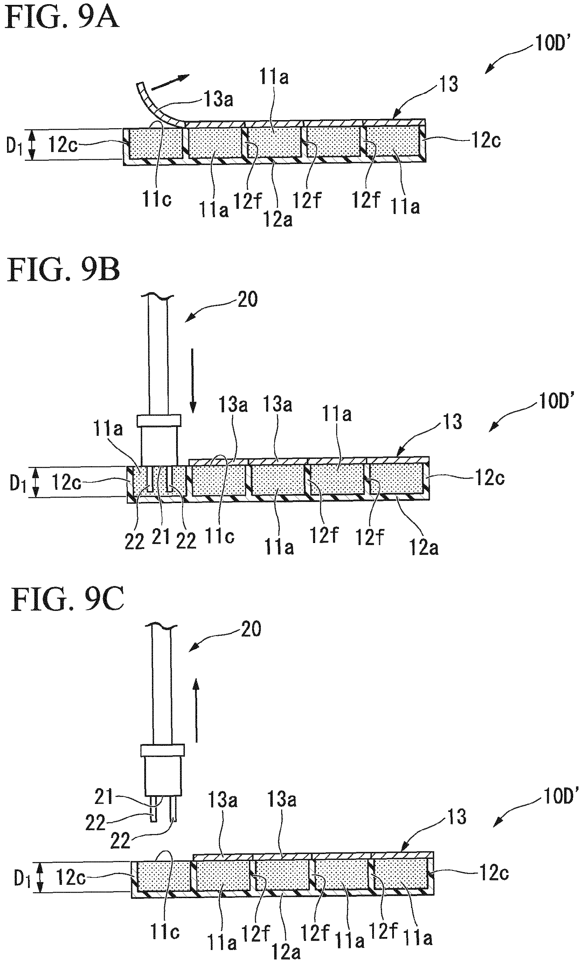

When cleaning the end face (connection end face) 21 having a fitting pin 22 projected thereon of the optical connector 20 using the end-face cleaner 10D 'of FIG. 8A, firstly, as shown in FIG. 9A, the operator peels off one piece of the film 13a located at the end of the end-face cleaner 10D' in the longitudinal direction to expose the surface 11c of the adhesive layer 11a in the area covered with this film piece 13a.

Subsequently, the operator holds the optical connector with one hand and holds the end-face cleaner 10D 'with the other hand, and brings the end face 21 of the optical connector 20 close to the surface 11c of the adhesive layer 11a in the area where the film piece 13a is peeled off, and pierces the fitting pin 22 into the adhesive layer 11a, thereby the end face 21 is pressed against the surface 11c of the adhesive layer 11a as shown in FIG. 9B. In this example, since the thickness (D1) of the adhesive layer 11a is equal to or greater than the length of the fitting pin 22 of the optical connector 20, the fitting pin 22 is pierced into the adhesive layer 11a over the entire length. Further, in this example, a non-penetrating hole is formed by piercing the fitting pin 22 into the adhesive layer 11a.

Thereafter, as shown in FIG. 9C, the end face 21 of the optical connector 20 is pulled away from the adhesive layer 11a, and the fitting pin 22 is pulled out from the adhesive layer 11a. When the fitting pin 22 is removed from the adhesive layer 11a, the non-penetrating hole is closed.

In the case of subsequently cleaning another end face 21 of the optical connector 20 using the same end-face cleaner 10D', a film piece 13a other than the film piece 13a which has been already peeled off (for example, a film piece 13a next to the film piece 13a which has been peeled off) is peeled off to newly expose a surface 11c of the adhesive layer 11a in another area. Then, the end face 21 of the optical connector 20 is brought close to the exposed surface 11c of the adhesive layer 11a in the same manner as described above to pierce the fitting pin 22 into the adhesive layer 11a, and press the end face 21 against the surface 11c of the adhesive layer 11a, and then pull out the fitting pin 22 from the adhesive layer 11a.

If the amount of dirt and dust adhered to the end face 21 of the optical connector 20 and the fitting pin 22 to be cleaned is small and the degree of contamination is low, the surface 11c of the adhesive layer 11a in the same area may be used to clean the end faces 21 of the plurality of optical connectors 20. When the degree of contamination is high, it is preferable to newly peel a film piece 13a in another area to expose a new surface 11c to clean the end face 21.

In this example, although the cover film 13 is divided and composed of a plurality of film pieces 13a having the same number as the number of the adhesive layers 11a divided by the partition plate 12f in order to correspond to the surface 11c of the adhesive layer 11a in each area, the cover film 13 is not necessarily divided.

When the cover film 13 is not divided, the cover film is partly peeled so that the surface 11c of the adhesive layer 11a in one area is exposed, and the end face 21 of the optical connector 20 is pressed against the surface 11c to perform cleaning. After cleaning, the cover film may be restored to cover the exposed adhesive layer 11a again.

As described above, the end-face cleaner 10D' of this example is provided with a support having a partition plate 12f and a side wall 12c, and performs cleaning of the end face 21 by pressing the optical connector 20 against the surface 11c of the adhesive layer 11a exposed in each area divided by the partition plate 12f to pierce the fitting pin 22.

When the adhesive layer 11a is divided into a plurality of areas as described above, it is possible to guide and urge an operator who is unfamiliar with the cleaning of the end face 21 of the optical connector 20 to press the end face 21 of the optical connector 20 against the surface 11c of the adhesive layer 11a exposed in each of the divided areas. Therefore, even an operator unfamiliar with the cleaning operation can perform the cleaning work smoothly without problems.

In addition, if the partition plates 12f are arranged parallel to the short side direction of the end-face cleaner 10D' and are equally spaced from each other as in this example, so that the adhesive layers 11a in respective areas are aligned, when the end face 21 of the plurality of optical connectors 20 is cleaned with one end-face cleaner 10D', it is possible to use the adhesive layers 11a sequentially from the terminal area, thereby providing excellent workability. However, the adhesive layer may also be randomly divided by a plurality of partition plates and randomly arranged. In addition, in this example, the partition plate 12f parallel to the short side direction of the end-face cleaner 10D' is provided, but it is also acceptable that a partition plate parallel to the longitudinal direction of the end-face cleaner 10D' be provided, or both the partition plate parallel to the short side direction and the partition plate parallel to the longitudinal direction be provided. That is, the adhesive layer may be divided in the longitudinal direction and the short side direction.

In addition, it is preferable that the surface 11c of the adhesive layer 11a in each area have a shape similar to that of the end face 21 of the optical connector 20 and be formed to have a size slightly larger than the end face 21 as in this example from the viewpoint of urging an operator who is unfamiliar with the cleaning operation to press the end face 21 of the optical connector 20 one by one against the surface 11c of the adhesive layer 11a in each area. However, the size and shape of the surface 11c of the agent layer 11a are not limited as long as it can press at least one entire surface of the end face 21.

In addition, the end-face cleaner 10D' of this example is also formed in a size that can be carried by an operator. Therefore, in the case where the operator performs the optical connector-connecting operation at a certain place and then moves to another place to perform the optical connector-connecting operation, the end end-face cleaner 10D' can be easily carried to perform the cleaning at each place.

As the support of the end-face cleaner 10D', which is composed of the rigid plate 12a, the side wall 12c formed on the periphery of the plate 12a, and one or more partition plates 12f, a continuous body or the like in which a plurality of shallow dish-like containers having one end (upper end) opened are connected can be used.

When the continuous body or the like having a plurality of dish-like containers is used as described above, the end-face cleaner 10D' can be manufactured continuously with good productivity by a method in which a monomer component constituting the adhesive layer 11a is poured into each container, while the continuous body is continuously conveyed by a belt conveyor or the like, and then the continuous body is conveyed to a curing zone for curing a monomer component to cure the monomer component. In the curing zone, a heating means, a light-irradiating means and the like are provided as a curing means according to the type of the monomer component or the like. The material of the partition plate 12f may be the same as or different from that of the plate 12a and the side wall 12c. After forming the adhesive layer 11a, the cover film 13 is provided thereon, so that the end-face cleaner 10D' of this example can be manufactured.

### [Sixth Embodiment]

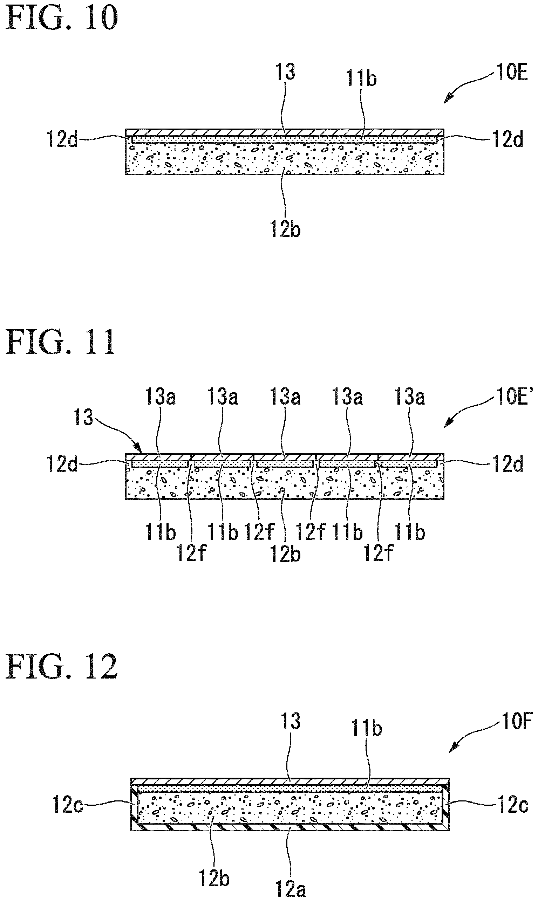

FIG. 10 is a vertical cross-sectional view showing an end-face cleaner according to the sixth embodiment.

The end-face cleaner 10E of the sixth embodiment is different from the end-face cleaner 10B of the second embodiment and the third embodiment in that the end-face cleaner 10E of the sixth embodiment includes, as a support, a plate 12b configured to be pierced with the fitting pin 22 and a side wall 12d formed on the periphery of the plate 12b so as to surround the adhesive layer 11b from the side.

Even in the case of using the end-face cleaner 10E of the sixth embodiment, as in the case of the end-face cleaner 10A of the first embodiment, the operator can carry the end-face cleaner and clean the end face 21 having the fitting pin 22 projected thereon of the optical connector 20 in a short time using a similar and simple procedure and operation.

As a support composed of the plate 12b configured to be pierced with the fitting pin 22 and the side wall 12d formed on the periphery of the plate 12b, a shallow dish-like container or the like having one end (upper end) opened can be used, and thereby the end-face cleaner 10E can be easily manufactured as described above.

The material of the side wall 12d may be the same as or different from that of the plate 12b.

Further, as shown in FIG. 11, partition plates 12f erected on the plate 12b to divide the adhesive layer 11b into plural parts may be used as a support in addition to the above described plate 12b and side wall 12d. In the end-face cleaner 10E' of this example, the number of the partition plates 12f, the arrangement thereof, the form of the cover film 13, and the like can be set and constructed in the same manner as described for the end-face cleaner 10D' in FIG. 8A. The material of the partition plate 12f may be the same as or different from that of the plate 12b and the side wall 12d. Also, the end-face cleaner 10E' can be used in the same manner as the end-face cleaner 10D'. Further, similarly to the end-face cleaner 10D' in FIG. 8A, it is possible to continuously manufacture with good productivity.

### [Seventh Embodiment]

FIG. 12 is a vertical cross-sectional view showing an end-face cleaner according to the seventh embodiment.

The end-face cleaner 10F of the seventh embodiment is different from the end-face cleaner 10C of the fourth embodiment in that the end-face cleaner 10F of the seventh embodiment includes a support having two layers of a rigid plate 12a and a plate 12b configured to be pierced with a fitting pin 22, and a side wall 12c is formed on the periphery of the plate so as to surround the adhesive layer 11b from the side. In this example, the side wall 12c is erected on the rigid plate 12a.

Even in the case of using the end-face cleaner 10F of the seventh embodiment, as in the case of the end-face cleaner 10A of the first embodiment, the operator can carry the end-face cleaner and clean the end face 21 having the fitting pin 22 projected thereon of the optical connector 20 in a short time using a similar and simple procedure and operation.

As a support composed of a plate having two layers of the plate 12a and the plate 12b, and a side wall 12c formed on the periphery of the plate, a support in which the plate 12b configured to be pierced with the fitting pin 22 is formed on the inner bottom of a rigid container having a shallow dish shape and having one end (upper end) opened and having rigidity.

By using the above-described support, the monomer component constituting the adhesive layer 11b can be poured. Then, these monomer components are cured (crosslinked) by heating, light irradiation or the like according to need, thereby the end-face cleaner 10F can be easily manufactured.

Further, the plate 12b may be formed by a method of pouring a raw material of foam into a rigid container having a shallow dish shape and having one end opened (upper end) to foam, cure, or the like.

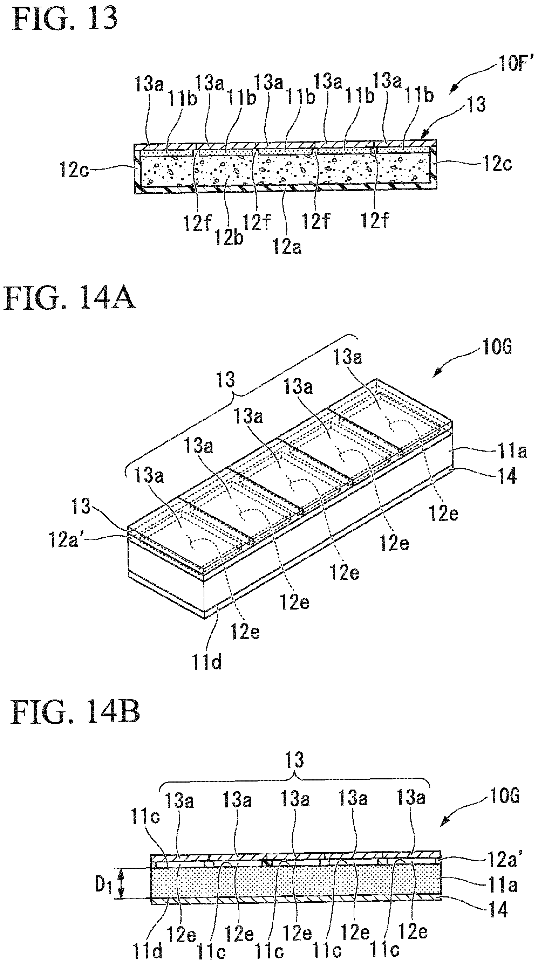

As shown in FIG. 13, in addition to the two-layer plate and the side wall 12c including the rigid plate 12a and the plate 12b configured to be pierced with the fitting pin 22, as the support, the support may further include a partition plate 12f erected on the plate 12b and divides the adhesive layer 11b into a plurality of parts. In the end-face cleaner 10E' of this example, the number of the partition plates 12f, the arrangement thereof, the form of the cover film 13, and the like can be set and constructed in the same manner as described for the end-face cleaner 10D' in FIG. 8A. The material of the partition plate 12f may be the same as or different from that of the plate 12b and the side wall 12d. Also, the end-face cleaner 10E' can be used in the same manner as the end-face cleaner 10D'. Further, similarly to the end-face cleaner 10D' in FIG. 8A, it is possible to continuously manufacture with good productivity.

In addition, in this example, although the partition plate 12f is erected on the plate 12b, it may also be erected on the plate 12a. When being erected on the plate 12a, the plate 12b will also be divided by the partition plate 12f, and it is acceptable.

### [Eighth Embodiment]

FIG. 14A is a perspective view showing an end-face cleaner of the eighth embodiment, and FIG. 14B is a vertical cross-sectional view showing an end-face cleaner of the eighth embodiment.

The end-face cleaner 10G of the eighth embodiment includes an adhesive layer 11a configured to be pierced with a fitting pin and a plate 12a' (support) laminated on one surface of the adhesive layer 11a and support the same, wherein the end-face cleaner is formed in a rectangular plate shape having a portable size. The plate 12a' has rigidity, and one or more openings 12e are formed on the plate 12a'. Further, the surface 11c of the adhesive layer 11a is exposed from the opening 12e.

In the end-face cleaner 10G of the eighth embodiment, the end face 21 having the fitting pin 22 projected thereon, as well as a peripheral face of the fitting pin 22, can be cleaned easily and quickly by piercing the fitting pin 22 projected on the end face 21 of the optical connector 20 into the surface 11c of the adhesive layer 11a exposed from each opening 12e, and pressing the end face 21 against the surface 11c of the adhesive layer.

As shown in FIG. 14B, the end-face cleaner 10G of the eighth embodiment has an adhesive layer 11a having a thickness (D₁) that is equal to or greater than the length (L) of the fitting pin 22 of the optical connector 20.

The plate 12a' has rigidity and a plurality (five in this example) of openings 12e are formed in a row along the longitudinal direction of the end-face cleaner 10G, and the surface 11c of the adhesive layer 11a is exposed from each opening 12e. The shape of each opening 12e is substantially similar to that of the end face 21 of the optical connector 20 and the size is slightly larger than the end face 21.

The opening 12e can be formed by a known method such as punching out a rigid plate.

As in the case of the first embodiment, the plate 12a' of this example is made of a metal plate, a resin plate, etc., and the thickness is set according to the material thereof or the like so that the rigid plate 12a' can stably support the adhesive layer 11a.

In addition, a cover film 13 is provided on the surface of the plate 12a' on the side where the adhesive layer 11a is not provided so as to peelably cover the opening 12e. In this example, the cover film 13 is divided into a plural parts (five in this example) so as to correspond to the respective openings 12e. That is, the cover film 13 of this example is divided into five film pieces 13a.

In this example, the surface 11d of the adhesive layer 11a on the side where the plate 12a' is not provided is not used for cleaning. For this reason, the covering film 14 covering the adhesive layer 11a in a non-peelable manner is provided on the surface 11d. The covering film 14 may not have rigidity capable of supporting the adhesive layer 11a, and the material thereof or the like are not limited. For example, a resin film, paper, or the like can be used.

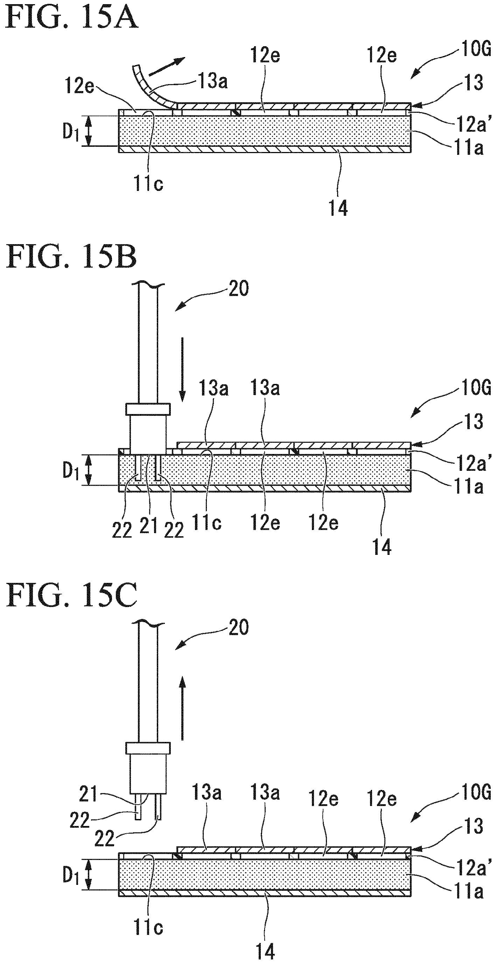

When cleaning the end face (connection end face) 21 having the fitting pin 22 projected thereon of the optical connector 20 using the end-face cleaner 10G of the eighth embodiment, first, as shown in FIG. 15A, one piece of film piece 13a located at the end in the longitudinal direction of the end-face cleaner 10G is peeled off and an opening 12e covered with this film piece 13a is opened to expose the surface 11c of the adhesive layer 11a.

Subsequently, the operator holds the optical connector with one hand and holds the end-face cleaner 10G with the other hand, and brings the end face 21 of the optical connector 20 close to the surface 11c of the adhesive layer 11a which is exposed from the opening 12e by peeling off the film piece 13a, and pierces the fitting pin 22 into the adhesive layer 11a, thereby the end face 21 is pressed against the surface 11c of the adhesive layer 11a as shown in FIG. 15B. In this example, since the thickness (D₁) of the adhesive layer 11a is equal to or greater than the length of the fitting pin 22 of the optical connector 20, the fitting pin 22 is pierced into the adhesive layer 11a over the entire length. Further, in this example, a non-penetrating hole is formed by piercing the fitting pin 22 into the adhesive layer 11a.

Thereafter, as shown in FIG. 15C, the end face 21 of the optical connector 20 is pulled away from the adhesive layer 11a, and the fitting pin 22 is pulled out from the adhesive layer 11a. When the fitting pin 22 is removed from the adhesive layer 11a, the non-penetrating hole is closed.

In the case of subsequently cleaning another end face 21 of the optical connector 20 using the same end-face cleaner 10G, an operation is performed in which the film piece 13a other than the film piece 13a which has been already peeled off (for example, the film piece 13a next to the film piece 13a which has been peeled off) is peeled off to newly expose the surface 11c of the adhesive layer 11a from the opening 12e, then the end face 21 of the optical connector 20 is brought close to the surface 11c of the exposed adhesive layer 11a in the same manner as described above to pierce the fitting pin 22 into the adhesive layer 11a, the end face 21 is pressed against the surface 11c of the adhesive layer 11a, and then the fitting pin 22 is removed from the adhesive layer 11a.

In addition, if the amount of dust and dirt adhered to the end face 21 and the fitting pin 22 of the optical connector 20 to be cleaned is small and the degree of contamination is low, a plurality of end faces 21 of the optical connectors 20 may be cleaned with the surface 11c of the adhesive layer 11a, which is exposed from the same opening 12e. If the degree of contamination is large, it is preferable to newly peel off the film piece 13a from another opening 12e to expose a new surface 11c and clean the end face 21.

In this example, although the cover film 13 is composed of a plurality of film pieces 13a divided into the same number as the number of the openings 12e so as to correspond to the respective openings 12e, It does not necessarily have to be divided.

When not divided, the cover film is partially peeled off so that one opening 12e is opened to expose a surface 11c of the adhesive layer 11a, and the end face 21 of the optical connector 20 is pressed against this surface 11c to perform cleaning. After cleaning, the cover film may be returned to the original state to cover again the exposed adhesive layer.

As described above, the end-face cleaner 10G of the eighth embodiment is composed of a plate 12a' having an opening 12e formed therein as a support, and cleans the end face 21 by pressing the end face 21 of the optical connector 20 against the surface 11c of the adhesive layer 11a exposed from the opening 12e, and piercing the fitting pin 22.

If the opening 12e is formed on the plate 12a' in this manner, it is possible to guide and urge an operator who is not familiar with the cleaning of the end face 21 of the optical connector 20 to press the end face 21 of the optical connector 20 against the surface 11c of the adhesive layer 11a exposed from the opening 12e. Therefore, even an operator unfamiliar with the cleaning operation can perform cleaning work smoothly without problems.

If the openings 12e are formed in alignment as in this example, when cleaning end faces 21 of a plurality of optical connectors 20 with one end-face cleaner 10G, it is possible to perform sequentially from the terminal opening 12e, thereby providing excellent workability, though the openings may also be randomly arranged in some cases. In addition, the openings may not only be arranged in one row, but also be arranged in two or more rows, and the number of rows is not limited.

Further, as in this example, it is preferable that the shape and size of the opening 12e be substantially similar to the end face 21 of the optical connector 20 and the opening 12e have a size slightly larger than the end face 21, because an operator who is not familiar with cleaning can be urged to press the end faces 21 of the optical connector 20 one by one against the surface 11c of the adhesive layer 11a exposed from the opening 12e. However, it is not limited to this example as long as it is formed into a size and shape so that an entire surface of at least one end face 21 can be pressed.

Further, the end-face cleaner 10G of this example is also formed in a size that can be carried by an operator.

Therefore, in the case where the operator performs the optical connector connecting operation at a certain place and thereafter moves to another place to perform the optical connector connecting operation, etc., the end-face cleaner 10G can be easily carried and the cleaning work can be performed at each place.

The end-face cleaner 10G of the eighth embodiment is formed by, for example, a method in which an adhesive layer 11a is formed on a covering film 14, and then a plate 12a' having an opening 12e and a cover film 13 are formed thereon in this order. The adhesive layer 11a may be formed according to the material of the adhesive layer or the like as described above.

### [Ninth Embodiment]

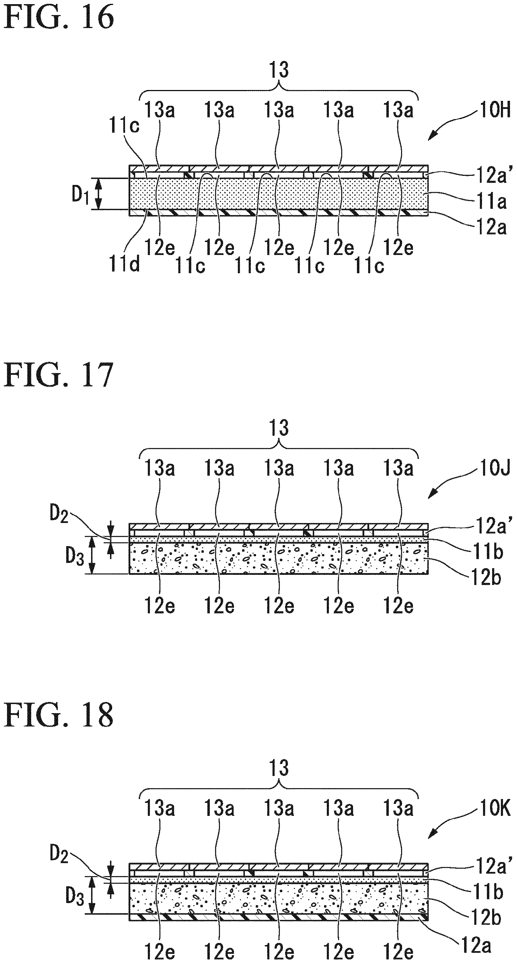

FIG. 16 is a vertical cross-sectional view showing an end-face cleaner of the ninth embodiment.

The end-face cleaner 10H of the ninth embodiment includes an adhesive layer 11a having a thickness (D₁) equal to or greater than the length (L) of the fitting pin 22 of the optical connector 20. On one surface of the adhesive layer 11a, a plate 12a' formed with an opening 12e similar to that used in the eighth embodiment is provided as a first support. On the other surface 11d of the adhesive layer 11a, a rigid plate 12a in which no opening is formed is provided as a second support.

The end-face cleaner 10H of the ninth embodiment is an embodiment in which the cover film 14 of the end-face cleaner 10G of the eighth embodiment is replaced with a rigid plate 12a (the second support) so that more rigidity and strength are imparted.

Similarly to the end-face cleaner 10G of the eighth embodiment, the end-face cleaner 10H of the ninth embodiment can be carried by an operator, and the end face 21 having the fitting pin 22 projected thereon of the optical connector 20 can be cleaned in a short time by a similar and simple procedure and operation. In addition, the end-face cleaner 10G of the eighth embodiment can be manufactured in the same manner as the end-face cleaner 10G of the eighth embodiment except that a rigid plate 12a is used instead of the cover film.

### [Tenth Embodiment]

FIG. 17 is a vertical cross-sectional view showing an end-face cleaner of the tenth embodiment.

The end-face cleaner 10J of the tenth embodiment is different from the end-face cleaner 10H of the ninth embodiment in that the adhesive layer 11b is formed with a thickness (D₂) smaller than the length (L) of the fitting pin 22 of the optical connector 20, and the end-face cleaner includes a plate 12b configured to be pierced with the fitting pin 22 as a second support. The total thickness (D₃) of the adhesive layer 11b and the plate 12b configured to be pierced with the fitting pin 22 is set to be not less than the length (L) of the fitting pin 22 of the optical connector 20.

The end-face cleaner 10J of the tenth embodiment can reduce the amount of the adhesive for forming the adhesive layer as compared with the end-face cleaner 10H of the ninth embodiment. Therefore, the cost required for forming the adhesive layer can be suppressed.

In addition, by using a foam for the plate 12b of the end-face cleaner 10J of the tenth embodiment, the feeling of use of the end-face cleaner 10J can be improved. That is, when an operator pierces the fitting pin 22, the sense of resistance is reduced, while clarity of response to the cleaning operation (feeling at piercing) can be obtained.

Similarly to the end-face cleaner 10G of the eighth embodiment, the end-face cleaner 10J of the tenth embodiment can be carried by an operator and the end face 21 having the fitting pin 22 projected thereon of the optical connector 20 can be cleaned in a short time by a similar and simple procedure and operation. The end-face cleaner 10J of the tenth embodiment can be manufactured by a method similar to that of the end-face cleaner 10G of the eighth embodiment except that the adhesive layer 11b is formed on the plate 12b configured to be pierced with the fitting pin 22.

### [Eleventh embodiment]

FIG. 18 is a vertical cross-sectional view showing an end-face cleaner according to the eleventh embodiment.

In the end-face cleaner 10J of the tenth embodiment described above, the second support is composed of only the plate 12b which is configured to be pierced with the fitting pin 22 and provided in contact with the adhesive layer 11b, whereas as shown in FIG. 18, the second support of the end-face cleaner 10K of the eleventh embodiment is composed of two layers, namely, composed of a plate which is configured to be pierced with a fitting pin 22 and provided in contact with the adhesive layer 11b, and a rigid plate 12a such as a metal plate, a resin plate, and the like. It is not necessary that the plate 12a of the second support can be pierced with the fitting pin 22.

With such a configuration, more rigidity and strength can be imparted to the end-face cleaner 10K, and the plate 12b configured to be pierced with the fitting pin 22 can also be protected.

Although the plate used as the second support is two layers in this example, three or more layers are acceptable if necessary. However, in the case of using the plate 12b configured to be pierced with the fitting pin 22 as a plate, it is necessary that the plate 12b is provided in contact with the adhesive layer 11b as shown in FIG. 18.

Even in the case of using the end-face cleaner 10K of the eleventh embodiment, as in the case of the end-face cleaner 10G of the eighth embodiment, the operator can carry the end-face cleaner and clean the end face 21 having the fitting pin 22 projected thereon of the optical connector 20 in a short time using a similar and simple procedure and operation.

The end-face cleaner 10K of the eleventh embodiment can be manufactured by a method in which a lamination of the rigid plate 12a and the plate 12b configured to be pierced with the fitting pin 22 is formed, and the adhesive layer 11b is formed thereon so as to contact with the plate 12b configured to be pierced with the fitting pin 22, then the plate 12a' with the opening 12e formed thereon and the cover film 13 are laminated thereon further in this order.

As described above, the adhesive layer 11b may be formed according to the material of the adhesive layer 11b or the like. An adhesive layer (not shown) may be interposed between the rigid plate 12a and the plate 12b configured to be pierced with the fitting pin 22.

### [Other Embodiments]

In the ninth to eleventh embodiments described above, although the plate is used as the second support, as in the end-face cleaners 10D, 10E, and 10F of the fifth to seventh embodiments, a support composed of a plate and a side wall formed around the peripheral edge of the plate may also be used.

In addition, the shape of the cover covering the exposed surface of the adhesive layer is not limited to a film-shape, and there is no limitation on the shape as long as the cover such as a lid-shape, a cap-shape, etc. can protect the adhesive layer from the dirt.

Further, for example, although in the end-face cleaner 10A of the first embodiment, the side surface of the adhesive layer 11a is exposed as shown in FIG. 1, it is preferable that a frame or the like be provided around the adhesive layer 11a to protect the side surface of the adhesive layer 11 from the dirt. In other examples as well (example in which the support is not provided with a side wall), the side surface of the adhesive layer may also be covered with a frame or the like in the same manner.

In the first to eleventh embodiments described above, although a rectangular plate-like cleaner having a size that can be carried by an operator is exemplified as each of the end-face cleaners 10A to 10K, the shape is not limited to a rectangle, and may be circular or the like. In addition, the end-face cleaner may have a shape other than a plate-shape according to the object to be cleaned, and it may not be a portable size.

Further, the number of pins that the object to be cleaned has on the end face thereof is not limited to two, and may be one or three or more. Further, the shape of the cross section of the pin (the surface orthogonal to the longitudinal direction) is not limited to a circular shape, and may be a polygonal shape, a C shape, or the like, and there is no limitation.

### INDUSTRIAL APPLICABILITY

The end-face cleaner of the present invention is capable of cleaning an end face having a pin such as a fitting pin projected thereon as well as a peripheral surface of the pin with a simple and single operation in a short time, and is simple in configuration, advantageous in cost, and thus is industrially useful.

### [Explanation of sign]

10A to 10K end-face cleaner
11a, 11b adhesive layer
11c surface of adhesive layer
12a plate (having rigidity)
12a' plate (having rigidity and opening)
12b plate (configured to be pierced with pin)
12c, 12d side wall
12e opening
12f partition plate
13 cover film (cover)
13a film piece
20 optical connector
21 end face of optical connector
22 fitting pin

## Claims

1. An end-face cleaner for cleaning an end face having a pin projected thereon, comprising
an adhesive layer configured to be pierced with a pin, and
a support configured to support the adhesive layer and expose a partial surface of the adhesive layer.

2. The end-face cleaner according to claim 1, wherein
the support is composed of a plate.

3. The end-face cleaner according to claim 1, wherein
the support comprises a plate and a side wall formed around a periphery of the plate so as to surround the adhesive layer from the side.

4. The end-face cleaner according to claim 3, wherein
the support is further composed of a partition plate erected on the plate.

5. The end-face cleaner according to any one of claims 2 to 4, wherein
the plate includes one or more layers, and
a layer which is in contact with the adhesive layer of the plate is configured to be pierced with the pin.

6. The end-face cleaner according to claim 2, wherein
one or more openings are formed on the plate, and
a surface of the adhesive layer is exposed from the openings.

7. The end-face cleaner according to claim 1, wherein
the support includes a first support covering one side of the adhesive layer and a second support covering the other side of the adhesive layer,
the first support is composed of a plate,
one or more openings are formed on the plate, and
the surface of the adhesive layer is exposed from the openings.

8. The end-face cleaner according to claim 7, wherein
the second support is composed of a plate.

9. The end-face cleaner according to claim 7, wherein
the second support is composed of a plate and a side wall formed around a periphery of the plate so as to surround the adhesive layer from the side.

10. The end-face cleaner according to claim 8 or 9, wherein
the plate of the second support includes one or more layers, and
a layer which is in contact with the adhesive layer of the plate of the second support is configured to be pierced with the pin.

11. The end-face cleaner according to any one of claims 1 to 10, wherein
the end-face cleaner comprises a cover for covering the exposed surface of the adhesive layer.

12. The end-face cleaner according to claim 5 or 10, wherein
the layer which is in contact with the adhesive layer of the plate is formed of a foam.

13. The end-face cleaner according to claim any one of claims 1 to 12, wherein
the end-face cleaner is for cleaning an optical connector having a pin projected on an end face thereof.
